# EUROPÄISCHE PATENTANMELDUNG

(11) **EP 1 123 850 A2**
(43) Veröffentlichungstag der Anmeldung: **16.08.2001**
(21) Anmeldenummer: 01103116.8
(22) Anmeldetag: 09.02.2001
(51) Int. Cl.: B61B 10/02, B65G 19/02

(54) **Fördereinrichtung, insbesondere Fördergutträger für eine Hängefördereinrichtung**

(30) Priorität: 09.02.2000 DE 10005646
(71) Anmelder: WF Logistik GmbH, 86899 Landsberg (DE)
(72) Erfinder: Gossner, Anton, 86161 Augsburg (DE)
(74) Vertreter: Tiesmeyer, Johannes, Dr.

(57) **Zusammenfassung**

Es wird eine Hängefördereinrichtung angegeben mit Fördergutträgern (1), wenigstens einer Laufschiene (3), an der die Fördergutträger (1) geführt bewegbar sind, und einem zur Mitnahme betreffender Fördergutträger (1) längs der Laufschiene (3) bewegbaren Antriebsband (15) mit davon abstehenden elastisch auslenkbaren Mitnehmerfingern (21) für die Fördergutträger (1). Zur Beaufschlagung durch Mitnehmerfinger (21) weist jeder Fördergutträger (1) ein zwischen einer Antriebsstellung und einer Freigabestellung bewegbar an dem Fördergutträger (1) gelagertes Kopplungselement (27) auf, das in der Antriebsstellung in den Weg der Mitnehmerfinger (21) ragt, wohingegen es in der Freigabestellung aus dem Weg der Mitnehmerfinger zurückgezogen ist. Bei Auftreffen auf ein frontales Hindernis geht das Kopplungselement (27) in die Freigabestellung über.

## Beschreibung

Die Erfindung betrifft eine Fördereinrichtung, insbesondere Hängefördereinrichtung, mit Fördergutträgern, die mit Laufrollen ausgestattet und zum Transport von Fördergut vorgesehen sind, wenigstens einer Laufschiene, an der die Fördergutträger längs einer Förderstrecke geführt bewegbar sind, und einem zumindest bereichsweise längs der Laufschiene geführten und zur Mitnahme betreffender Fördergutträger längs der Laufschiene bewegbaren Antriebsband mit davon abstehenden Mitnehmerelementen für die Fördergutträger, wobei die Fördergutträger jeweils wenigstens ein von Mitnehmerelementen des Antriebsbandes in Eingriff zu nehmendes Kopplungselement aufweisen und wobei die Mitnehmerelemente als elastisch nachgiebig auslenkbare Mitnehmerfinger ausgebildet sind.

Eine Hängefördereinrichtung der vorstehend genannten Art ist beispielsweise in der EP O 516 971 B1 beschrieben. Bei dieser bekannten Fördereinrichtung weisen die Fördergutträger zwei Laufrollen auf, die an den freien Schenkelenden eines V-förmigen oder U-förmigen Bügels drehbar angeordnet und schräg zueinander orientiert sind, so dass sie auf den Laufflächen einer satteldachförmigen Laufschiene längs einer betreffenden Förderstrecke rollen können, wobei sich der Bügel unter der Laufschiene hindurch erstreckt. Als Antriebsband weist die bekannte Hängefördereinrichtung eine Laschenkette auf, die längs der Förderstrecke in einer Kettenführung geführt ist. Zur Ankopplung der Fördergutträger an die Antriebskette dienen Mitnehmerfinger, die in bestimmten Abständen an der Antriebskette vorgesehen sind, wobei die Mitnehmerfinger seitlich von der Antriebskette quer zur Laufrichtung der Fördergutträger abstehen und in den Weg der Fördergutträger hineinragen. Wird die Antriebskette nun zur Bewegung längs der Förderstrecke angetrieben, so kann ein jeweiliger Mitnehmerfinger einen etwaig auf der Laufschiene vorhandenen Fördergutträger beaufschlagen und längs der Förderstrecke schieben bzw. mitnehmen, wobei der Fördergutträger mit seinen Laufrollen an der Laufschiene geführt ist. Bei den Mitnehmerfingern handelt es sich um jeweils einzelne, in sich elastische, nachgiebig auslenkbare Flachstabelemente aus Kunststoff, die über einen Bereich erhöhter Elastizität mit einem jeweiligen Mitnehmer-Halteteil der Antriebskette verbunden sind. Die Elastizität eines jeweiligen Mitnehmerfingers soll eine gewisse Dämpfung bei der Beaufschlagung des Fördergutträgers gewährleisten, wenn der Mitnehmerfinger auf einen starr am Fördergutträger vorgesehenen Kopplungsbereich trifft. Darüber hinaus kann ein betreffender elastischer Mitnehmerfinger bei einem Stopp des Fördergutträgers bei weiterlaufender Antriebskette soweit ausgelenkt werden, dass er außer Eingriff mit dem Fördergutträger gelangt, so dass in einer Stausituation der Fördergutträger das Antriebsband weiterlaufen kann, ohne die betreffenden Fördergutträger oder Mitnehmerfinger zu beschädigen. Allerdings erfährt ein gestoppter Fördergutträger jedes Mal, wenn ein Mitnehmerfinger bei weiterlaufender Antriebskette vorbeikommt, einen Auftreffstoß. Dabei kann es zu unerwünschten Vibrationen von Elementen der Fördereinrichtung und zu einer störender Geräuschentwicklung kommen. Die vorstehend genannten nachteiligen Effekte sind auch nicht durch die Elastizität bzw. nachgiebige Auslenkbarkeit der Mitnehmerfinger zu unterdrücken.

Es sind auch Hängefördereinrichtungen der eingangs genannten Art bekannt, bei denen an einem Antriebsband in Form einer Antriebskette Bürstenelemente in Abständen voneinander angeordnet sind, deren Borsten jeweils zu Gruppen zusammengefasste Mitnehmerfinger bilden. Wie im Falle des unter Bezugnahme auf die EP O 516 971 B1 beschriebenen Mitnehmerfingers sollen auch derartige Borsten eine Dämpfung bei der Beaufschlagung eines Fördergutträgers zur Mitnahme längs der Förderstrecke bewirken. Im Falle eines beabsichtigten oder unbeabsichtigten Stopps der Fördergutträger üben jedoch auch solche Bürstenelemente Auftreffstöße auf die Fördergutträger aus, so dass es zu entsprechenden Erschütterungen mit den bereits oben beschriebenen Nachteilen kommt.

Der Erfindung liegt die Aufgabe zugrunde, eine Fördereinrichtung und insbesondere einen Fördergutträger für eine Fördereinrichtung der eingangs genannten Art dahingehend zu verbessern, dass ein im Wesentlichen erschütterungsfreier, jedenfalls aber vergleichsweise erschütterungsarmer Staubetrieb bei weiterlaufendem Antriebsband der Fördergutträger möglich ist.

Zur Lösung dieser Aufgabe wird vorgeschlagen, dass bei einer Fördereinrichtung der eingangs genannten Art das Kopplungselement der Fördergutträger zwischen einer Antriebsstellung und einer Freigabestellung bewegbar an dem jeweiligen Fördergutträger gelagert ist, wobei es in der Antriebsstellung in den Weg der Mitnehmerfinger ragt, so dass es von einem Mitnehmerfinger in Eingriff genommen und zur Bewegung des Fördergutträgers längs der Förderstrecke mitgenommen werden kann, wohingegen es in der Freigabestellung im Wesentlichen aus dem Weg der Mitnehmerfinger zurückgezogen ist, wobei das Kopplungselement einen vorzugsweise nahe dem vorderen Ende des Fördergutträgers angeordneten Auftreffbereich aufweist, durch dessen Beaufschlagung das Kopplungselement aus der Antriebsstellung heraus in die Freigabestellung überführbar ist.

In der erfindungsgemäßen Anordnung des betreffenden Fördergutträgers an der Laufschiene nimmt das Kopplungselement normalerweise die Antriebsstellung ein, sofern es nicht zum Übergang in die Freigabestellung gezwungen wird. Ein betreffender Mitnehmerfinger des Antriebsbandes kann somit das Kopplungselement in Eingriff nehmen und den Fördergutträger längs der Förderstrecke schieben. Trifft nun ein solcher Fördergutträger mit dem Auftreffbereich des Kopplungselementes auf ein Hindernis, so kommt es dabei zur Verschiebung des Kopplungselementes in die Freigabestellung. Damit ist dann die Situation gegeben, dass die aufeinander folgenden Mitnehmerfinger entsprechend der Bewegung des Antriebsbandes längs der Förderstrecke weiterbewegt werden können, ohne den Fördergutträger zur Mitnahme in Eingriff zu nehmen, bis das Kopplungselement von dem Hindernis freikommt. Hindernis im vorstehend genannten Sinne kann auch ein vorausgehend gestoppter Fördergutträger sein. Es liegt dann der Fall eines Staus vor, in dem sich die Fördergutträger gegenseitig freischalten, d.h. vom Antriebssystem abkoppeln. Das Antriebsband kann weiterlaufen, wobei die Fördergutträger mit ihren in Freigabestellung befindlichen Kopplungselementen im Wesentlichen erschütterungsfrei in Staustellung verbleiben können. Kommt es bei Auflösung eines solchen Staus dann wieder zur sukzessiven Ankopplung der Fördergutträger ans Antriebsband, so erfolgt diese Ankopplung in einer gedämpften Weise aufgrund der nachgiebigen Auslenkbarkeit der die Kopplungselemente der Fördergutträger in Eingriff nehmenden Mitnehmerfinger.

Gemäß einer bevorzugten Ausführungsform der Erfindung handelt es sich bei den Mitnehmerfingern um Borsten, die von Borstenhalterungen des Antriebsbandes quer zu dessen Laufrichtung bzw. quer zur Richtung der Förderstrecke abstehen. Das Antriebsband kann der Länge nach kontinuierlich mit solchen Borsten bestückt sein. Als praktikabler hat sich jedoch eine Ausführungsform erwiesen, bei der die Borsten an einzelnen Bürstenelementen vorgesehen sind, die in Abständen voneinander an dem Antriebsband angeordnet sind. Bei dem Antriebsband handelt es sich vorzugsweise um eine Laschenkette, die in einer Kettenführung längs der Laufschiene bewegbar geführt ist. Ein Antriebsmotor sorgt für den Antrieb des Antriebsbandes bzw. der Antriebskette.

Bei dem Kopplungselement handelt es sich vorzugsweise um einen zwischen der Antriebsstellung und der Freigabestellung schwenkbaren, zur Antriebsstellung hin vorgespannten Hebel am vorlaufenden Ende des betreffenden Fördergutträgers. Der Hebel ist zweckmäßigerweise so an dem Fördergutträger gelagert, dass er mit seinem Auftreffbereich das vorderste Ende des Fördergutträgers bildet, wobei der Auftreffbereich des Kopplungselementes eine vordere Schrägfläche aufweist, die so gestaltet ist, dass sie als Steuerfläche zur Steuerung des Übergangs des Kopplungselements von der Antriebsstellung in die Freigabestellung wirksam wird, wenn sie von einem frontalen Hindernis beaufschlagt wird.

Gemäß einer bevorzugten Ausführungsform der Erfindung ist das Kopplungselement ein um eine im Wesentlichen horizontale Schwenkachse schwenkbarer Hebel, der unter der Wirkung der Schwerkraft normalerweise die Antriebsstellung einnimmt, wenn der Fördergutträger bestimmungsgemäß an seiner Laufschiene positioniert ist und kein Hindernis das Kopplungselement beaufschlagt.

Das Kopplungselement hat vorzugsweise einen seitlich abstehenden, in der Antriebsstellung in den Weg der Mitnehmerfinger ragenden Kopplungsbereich mit einer Eingriffsfläche für die Mitnehmerfinger, wobei der Kopplungsbereich durch Verschwenken des Kopplungselementes aus dem Weg der Mitnehmerfinger entfernbar ist. Befindet sich das Kopplungselement in seiner Antriebsstellung, so ist der Kopplungsbereich so weit nach unten hin verschwenkt, dass ein von hinten her kommender Mitnehmerfinger bzw. eine Gruppe von Mitnehmerborsten mit der Eingriffsfläche in Eingriff kommen, um den Fördergutträger längs der Förderstrecke zu verschieben. Trifft dann der Fördergutträger in der bereits beschriebenen Weise mit dem Auftreffbereich seines Kopplungselementes auf ein Hindernis, so kommt es zum Verschwenken des Kopplungsbereiches in Richtung nach oben aus dem Weg der Mitnehmerfinger heraus, wodurch die Abkopplung des Fördergutträgers vom Antriebs-system erfolgt. Vorzugsweise weist das Kopplungselement an beiden Seiten quer zur Laufrichtung einen verbreiterten Kopplungsbereich auf, so dass wahlweise von der einen Seite her oder von der anderen Seite her die Ankopplung eines Antriebsbandes möglich ist.

Gemäß einer besonders bevorzugten Ausführungsform der Erfindung sind die Fördergutträger an ihren entgegengesetzten Endseiten mit einem jeweiligen Kopplungselement ausgestattet, wobei die Kopplungselemente im Wesentlichen gleich gestaltet und in äquivalenten Positionen am jeweiligen Ende des Fördergutträgers angeordnet sind. Eine derartige Ausgestaltung der Fördergutträger ermöglicht einen Förderbetrieb mit Richtungsumkehr des Antriebsbandes und somit der Förderbewegung.

Bei der Fördereinrichtung handelt es sich vorzugsweise um eine Hängefördereinrichtung, bei der die Fördergutträger mit ihren Laufrollen hängend an einer Laufschiene abgestützt sind, wobei jeweils zwei Laufrollen an einem Laufwerk angeordnet sind, das einen in der Anordnung an der Laufschiene sich unter der Laufschiene hindurch erstreckenden Bügel aufweist, der an seinem unteren Ende mit einer Trageinrichtung für Fördergut versehen ist, wobei das jeweilige Kopplungselement an der Trageinrichtung oder am Bügel oder an einem die Trageinrichtung mit dem Bügel verbindenden Verbindungselement angeordnet ist. Hängefördereinrichtungen der vorstehend genannten Art finden beispielsweise in der Bekleidungsindustrie verbreitet Verwendung, wobei sie an Kleiderbügeln aufgehängte Kleidungsstücke transportieren. Die Fördergutträger sind häufig mit zwei Laufwerken ausgestattet, die durch eine Tragstange oder dergleichen als Trageinrichtung für das Fördergut miteinander verbunden sind.

Gegenstand der Erfindung ist ferner ein Fördergutträger für eine Hängefördereinrichtung, wobei der Fördergutträger in der oben beschriebenen Weise wenigstens ein Kopplungselement aufweist, welches zwischen einer Antriebsstellung und einer Freigabestellung bewegbar ist.

Ein Ausführungsbeispiel der Erfindung wird nachstehend unter Bezugnahme auf die Figuren näher erläutert.
- Fig. 1: zeigt eine teils im Querschnitt dargestellte Hängefördereinrichtung nach der Erfindung mit einem Fördergutträger in Vorderansicht.
- Fig. 2: zeigt in einer Perspektivdarstellung einen Fördergutträger der Fördereinrichtung gemäß Fig. 1 mit in Antriebsstellung befindlichem Kopplungselement, wobei sonstige Elemente der Fördereinrichtung lediglich schematisch mit gestrichelten Linien angedeutet sind.
- Fig. 3: zeigt in einer Darstellung gemäß Fig. 2 drei gestaute Fördergutträger mit in Freigabestellung befindlichen Kopplungselementen, wobei zwei der Fördergutträger nur teilweise und gebrochen dargestellt sind.

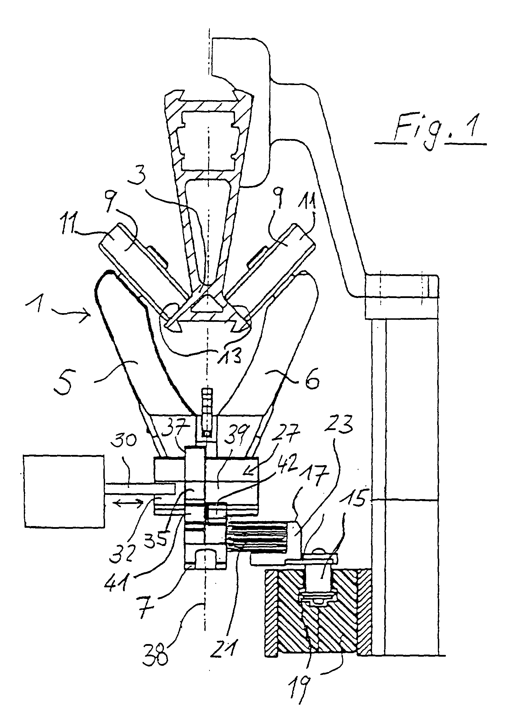

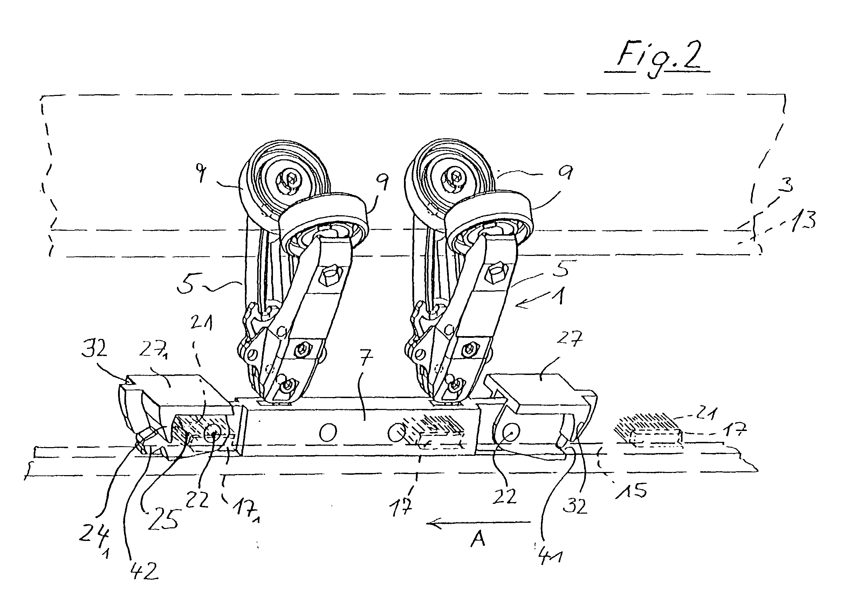

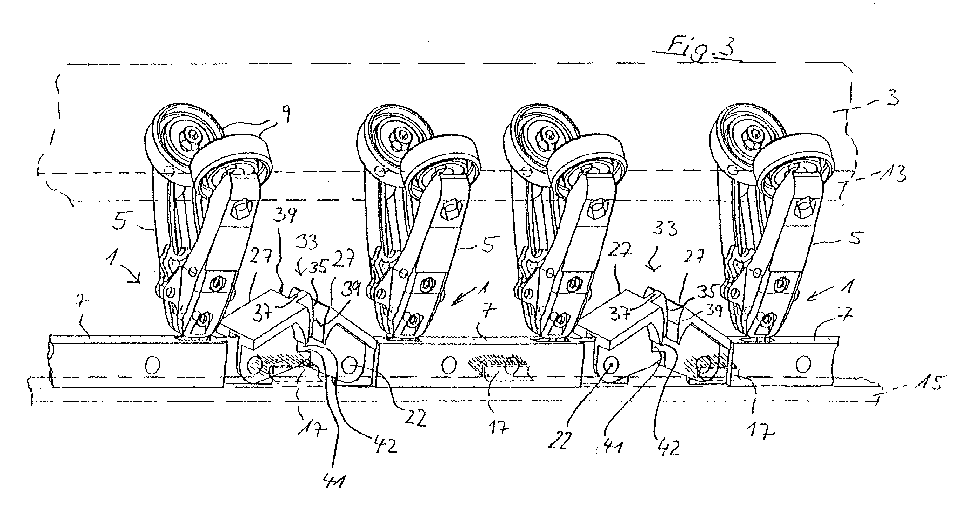

Fig. 1 zeigt einen Fördergutträger 1 in Vorderansicht an einer Laufschiene 3, die im Querschnitt dargestellt ist. Der Fördergutträger 1 umfasst zwei Laufwerke 5, die an ihren unteren Enden durch eine gemeinsame Fördergut-Tragstange 7 (vgl. Fig. 2 und Fig. 3) miteinander verbunden sind. Von den an der Laufschiene 3 hintereinander liegenden Laufwerken 5 ist in der Vorderansicht gemäß Fig. 1 lediglich eines, nämlich das vordere Laufwerk 5, erkennbar. Die einander entsprechenden Laufwerke 5 weisen einen jeweiligen V-förmigen Bügel 6 auf, der sich in der bestimmungsgemäßen Förderposition an der Laufschiene 3 unter der Laufschiene 3 hinweg erstreckt, so dass die beiden an den Schenkelenden des Bügels 7 gelagerten und schräg zueinander orientierten Laufrollen 9 mit ihren Laufflächen 11 an den komplementären Führungsflächen 13 der Laufschiene 3 abrollen können. Jedes Laufwerk 5 ist somit vermittels der Laufrollen 9 hängend an der Laufschiene 3 abgestützt und längs einer dem Verlauf der Laufschiene 3 entsprechenden Förderstrecke verfahrbar, um Fördergut zu transportieren. Fördergutträger der in den Fig. 1 - 3 gezeigten Art können beispielsweise in der Bekleidungsindustrie eingesetzt werden, um Kleidungsstücke an Kleiderbügeln zu transportieren, welche an der Tragstange 7 eines betreffenden Fördergutträgers 1 hängen.

Bei der Fördereinrichtung gemäß Fig. 1 ist als Antriebsmittel für Fördergutträger 1 eine Kette 15 mit daran aufeinander folgend angeordneten Mitnehmerelementen in Form von Bürsten 17 vorgesehen. Die Kette 15 läuft in einer Kettenführung 19 längs der Laufschiene 3 und wird als Endlosschleife von einem (nicht gezeigten) Antriebs-Zahnrad umlaufend angetrieben. Wie in Fig. 1 skizziert, stehen die Borsten 21 des Bürstenelementes 17 quer zur Laufrichtung des Fördergutträgers 1 im Bereich der Förderstrecke von dem Borstenträger 23 ab. Die Borstenträger 23 sind an der Antriebskette 15 befestigt. In Fig. 1 ist lediglich eines von mehreren in Abständen voneinander längs der Kette 15 vorgesehenen Bürstenelementen 17 erkennbar. Die Borsten 21 eines betreffenden Bürstenelementes 17 treten normalerweise mit einer Eingriffsfläche 25 eines Kopplungselementes 27 des Fördergutträgers 1 in Eingriff, um den Fördergutträger 1 zur Bewegung längs der Laufschiene 3 bzw. der Förderstrecke mitzunehmen. Im Beispielsfall weist jeder Fördergutträger 1 an seinen entgegengesetzten Enden ein jeweiliges Kopplungselement 27 auf, von denen nachstehend zunächst das in Laufrichtung A gemäß Fig. 2 vordere Kopplungselement 27 betrachtet wird.

Das Kopplungselement 27 ist zwischen einer nachstehend auch als Mitnehmer-Kopplungsstellung bezeichneten Antriebsstellung gemäß Fig. 2 und einer Mitnehmer-Freigabestellung gemäß Fig. 3 um eine vorzugsweise horizontale Schwenkachse 22 schwenkbar. Das Kopplungselement 27 nimmt unter Wirkung der Schwerkraft normalerweise die Antriebsstellung gemäß Fig. 2 selbsttätig ein, wobei der Kopplungsbereich 24 mit der Eingriffsfläche 25 so weit in die gezeigte Anschlagstellung nach unten verschwenkt ist, dass die Eingriffsfläche 25 in den Weg der vorderen Enden der Borsten 21 eines betreffenden Bürstenelementes 17 ragt. Bei Bewegung des Bürstenelementes 17 in Richtung des Pfeiles A kommt es zur Kopplung zwischen Bürstenelement 17 bzw. dessen Borsten 21 und dem Kopplungselement 27 des Fördergutträgers 1 und somit zur Mitnahme des Fördergutträgers 1. Da die Borsten 21 gegen einen Formänderungswiderstand nachgiebig auslenkbar sind, erfolgt die Kopplung zwischen Bürstenelement 17 und Kopplungselement 27 in gedämpfter Weise. In Fig. 2 und 3 sind die Antriebskette 15 und die daran befindlichen Bürstenelemente 17 sowie die Laufschiene 3 in einer Phantomdarstellung mit gestrichelten Linien lediglich schematisch und stark vereinfacht angedeutet, wobei das Borstenelement 17₁ mit dem Kopplungselement 27₁ in Eingriff stehend gezeichnet ist. Der betreffende Fördergutträger 1 wird somit von der Antriebskette 15 in Richtung des Pfeils A in Fig. 2 mitgeschleppt.

In Fig. 1 befindet sich das vordere Kopplungselement 27 in seiner Mitnehmer-Freigabestellung. In dieser Stellung ist der Kopplungsbereich 24 mit der Eingriffsfläche 25 aus dem Weg der Borsten 21 der Bürstenelemente 17 nach oben verschwenkt, so dass die Borsten 21 der Bürstenelemente 17 nunmehr im Wesentlichen ungehindert an dem Fördergutträger 1 vorbeibewegt werden können. Durch die Verschwenkbarkeit des Kopplungselementes 27 von der Mitnehmer-Kopplungsstellung gemäß Fig. 2 in die Mitnehmer-Freigabestellung gemäß Fig. 1 und Fig. 3 ist somit die Möglichkeit gegeben, Fördergutträger 1 anzuhalten bzw. aneinander zu stauen, ohne dass es dabei zu unerwünschten Schlägen von Borsten 21 der weiterhin bewegten Bürstenkörper 17 auf die betreffenden Fördergutträger 1 und zur damit einhergehenden Geräuschentwicklung kommt. Dadurch werden sowohl die Antriebsmittel 15, 17, 21 als auch die Fördergutträger 1 geschont, und ferner wird die Gefahr herabgesetzt, dass durch Erschütterungen Fördergut vom Fördergutträger 1 gelöst wird und herabfällt oder gar der Fördergutträger 1 selbst aus seiner geführten Förderposition an der Laufschiene 3 versetzt wird.

Fig. 1 zeigt den Fall, dass ein Stopperelement 30 in den Weg des Kopplungselementes 27 eingebracht wurde, wobei dieses Stopperelement 30 eine erste vordere Schrägfläche 32 des Kopplungselements 27 beaufschlagt, und zwar derart, dass es das Kopplungselement 27 unter Staudruck in der Mitnehmer-Freigabestellung hält, in der gemäß Fig. 1 bzw. Fig. 3 die Bürstenelemente 17 im Wesentlichen ohne Ankopplung an den betreffenden Fördergutträger 1 längs der Förderstrecke weiterbewegt werden können. Wie aus den Fig. 2 und 3 erkennbar, verläuft die Neigung der ersten Schrägfläche 32 so, dass die Schrägfläche 32 bei Auftreffen auf eine Barriere ein Verschwenken des Kopplungselementes 27 von der Mitnehmer-Kopplungsstellung in die Mitnehmer-Freigabestellung bewirkt. Sobald das in Fig. 1 dargestellte Stopperelement 30 aus dem Weg des Kopplungselementes 27 herausbewegt wird, fällt das Kopplungselement 27 unter der Wirkung der Schwerkraft in die Normalstellung, nämlich die Mitnehmer-Kopplungsstellung zurück, so dass ein sich längs der Förderstrecke dem Kopplungsbereich 24 nähernder Bürstenkörper 17 mit der Eingriffsfläche 25 des Kopplungselementes 27 in Eingriff treten kann, um den Fördergutträger 1 zu transportieren.

Fig. 3 zeigt bei 33 die Situation, dass sich die im Falle eines Staus einander zugewandten und miteinander in Eingriff gekommenen Kopplungselemente 27 benachbarter Fördergutträger 1 gegenseitig in die Mitnehmer-Freigabestellung versetzt haben und sich unter Staudruck in dieser Mitnehmer-Freigabestellung halten. Die Bürstenelemente 17 können somit ohne Ankopplung an die gestauten Fördergutträger 1 weiterbewegt werden. Das gegenseitige Freischalten der Kopplungselemente 27 gemäß Fig. 3 erfolgt aufgrund des Aufeinandertreffens der Schrägflächen 35 und 39 der beiden Kopplungselemente 27. Die Schrägfläche 35 ist an dem jeweiligen Vorsprung 37 ausgebildet, der relativ zur vertikalen Mittenebene 38 (vgl. Fig. 1) asymmetrisch seitlich versetzt an dem Kopplungselement 27 vorgesehen ist und eine Aussparung 41 aufweist, in die ein komplementärer Zahn 42 des betreffenden anderen Kopplungselementes 27 im Staufall eingreifen kann. Wie Fig. 1 zeigt, ist auch der jeweilige Zahn 42 eines Kopplungselementes 27 gegenüber der vertikalen Längs-Mittenebene 38 asymmetrisch versetzt vorgesehen. Der seitlich neben dem Vorsprung 37 liegende Zahn 42 eines Kopplungselementes 27 kann somit in die komplementäre Ausnehmung 41 des im Staufalle gegenüberliegenden Kopplungselementes eingreifen, wobei die Vorsprünge 37 der beiden Kopplungselemente 27 nebeneinander zu liegen kommen. Eine solche "Verzahnung" der einander in die Mitnehmer-Freigabestellung freischaltenden Kopplungselemente 27 wirkt einer etwaigen Tendenz entgegen, dass die Kopplungselemente 27 außer Flucht geraten und dabei in nicht beabsichtigter Weise mit ihren Endbereichen aneinander vorbeigeschoben werden. In den üblichen Situationen tritt eine solche Tendenz nicht auf, so dass die Gestaltung der Kopplungselemente 27 noch wesentlich vereinfacht werden kann. Insbesondere kann daran gedacht werden, die im Staufalle aufeinandertreffenden Schrägflächen ballig bzw. kugelkappenförmig zu gestalten, um ein Freischalten aufeinandertreffender Fördergutträger in die Mitnehmer-Freigabestellung auch dann zu ermöglichen, wenn das Aufeinandertreffen im Bereich einer Kurve der Förderstrecke erfolgt.

In dem gezeigten Ausführungsbeispiel nach den Figuren 1 - 3 weist jeder Fördergutträger 1 an den beiden entgegengesetzten Enden seiner Tragstange 7 ein jeweiliges Kopplungselement 27 auf, das um eine normalerweise horizontale Schwenkachse 22 zwischen den beiden Anschlagstellungen gemäß Fig. 2 und Fig. 3, nämlich zwischen der Antriebsstellung bzw. Mitnehmer-Kopplungsstellung und der Mitnehmer-Freigabestellung schwenkbar ist. Wie bereits erwähnt, nimmt das jeweilige Kopplungselement 27 unter der Wirkung der Schwerkraft normalerweise die Mitnehmer-Kopplungsstellung ein, sofern es nicht durch eine Barriere oder ein anderes Mitnehmerelement zum Verschwenken in die Mitnehmer-Freigabestellung veranlasst wird. Die beiden endseitigen Kopplungselemente 27 eines Fördergutträgers 1 haben vorzugsweise die gleiche Form, so dass beim Anhängen eines Fördergutträgers 1 an eine betreffende Laufschiene 3 nicht darauf geachtet werden muss, welches der beiden axialen Enden des Fördergutträgers 1 das in Laufrichtung vordere Ende und welches axiale Ende das hintere Ende bildet. Die in Fig. 2 mit dem Pfeil A angedeutete Laufrichtung könnte ggf. fallweise umgekehrt werden. Wenngleich in Fig. 1 die Antriebskette 15 mit den Bürstenelementen 17 an der rechten Seite des Fördergutträgers 1 bzw. der Laufschiene 3 liegt, könnte es alternativ oder ggf. zusätzlich ohne weiteres möglich sein, dass ein entsprechender Antriebsstrang aus einer Kette oder einem gleichartigen Antriebsband mit daran befindlichen Bürstenelementen oder sonstigen gegen einen Formänderungswiderstand auslenkbaren Mitnehmerelementen auf der gegenüberliegenden linken Seite für den Antrieb des Fördergutträgers 1 vorgesehen ist. Jedes Kopplungselement 27 hat zu diesem Zweck auf jeder Lateralseite einen verbreiterten Kopplungsbereich 24. Insbesondere bei Verwendung von Borsten als Mitnehmerelemente kann die Fördereinrichtung so eingestellt bzw. dimensioniert sein, dass im Falle eines Fördergutträger-Staus die Borsten schwach reibend in Berührung mit den Fördergutträgern stehen, solange sie an den Fördergutträgern vorbeibewegt werden.

Gemäß einer alternativen Ausführungsform könnten betreffende Kopplungselemente 27 an den Bügeln 6 der Laufwerke eines Fördergutträgers 1 oder ggf. an einem Verbindungsteil zwischen den Bügeln 6 und den Tragstangen 7 vorgesehen sein.

## Patentansprüche

1. Fördereinrichtung, insbesondere Hängefördereinrichtung, mit
- Fördergutträgern (1), die mit Laufrollen (9) ausgestattet und zum Transport von Fördergut vorgesehen sind,
- wenigstens einer Laufschiene (3), an der die Fördergutträger (1) längs einer Förderstrecke geführt bewegbar sind, und
- einem zumindest bereichsweise längs der Laufschiene (3) geführten und zur Mitnahme betreffender Fördergutträger (1) längs der Laufschiene (3) bewegbaren Antriebsband (15) mit davon abstehenden Mitnehmerelementen (21) für die Fördergutträger (1), wobei die Fördergutträger (1) jeweils wenigstens ein von Mitnehmerelementen (21) des Antriebsbandes (15) in Eingriff zu nehmendes Kopplungselement (27) aufweisen und wobei die Mitnehmerelemente (21) als insbesondere elastisch nachgiebig auslenkbare Mitnehmerfinger ausgebildet sind,
dadurch gekennzeichnet,
dass das Kopplungselement (27) zwischen einer Antriebsstellung und einer Freigabestellung bewegbar an dem Fördergutträger (1) gelagert ist, wobei es in der Antriebsstellung in den Weg der Mitnehmerfinger (21) ragt, so dass es von einem Mitnehmerfinger oder ggf. mehreren Mitnehmerfingern (21) in Eingriff genommen und zur Bewegung des Fördergutträgers (1) längs der Förderstrecke mitgenommen werden kann, wohingegen es in der Freigabestellung im Wesentlichen aus dem Weg der Mitnehmerfinger (21) zurückgezogen ist, wobei das Kopplungselement (27) einen Auftreffbereich (35, 39) aufweist, durch dessen Beaufschlagung das Kopplungselement (27) aus der Antriebsstellung heraus in die Freigabestellung überführbar ist.

2. Fördereinrichtung nach Anspruch 1, dadurch gekennzeichnet, dass das Antriebsband (15) Bürstenelemente (17) aufweist, deren normalerweise quer zur Laufrichtung des Antriebsbandes (15) orientierte, jedoch nachgiebig auslenkbare Borsten die Mitnehmerfinger bilden.

3. Fördereinrichtung nach Anspruch 1 oder 2, dadurch gekennzeichnet, dass das Kopplungselement (27) ein zwischen der Antriebsstellung und der Freigabestellung schwenkbarer, zur Antriebsstellung hin vorgespannter Hebel ist.

4. Fördereinrichtung nach einem der vorhergehenden Ansprüche, dadurch gekennzeichnet, dass das Kopplungselement (27) ein um eine im Wesentlichen horizontale Schwenkachse (22) schwenkbarer Hebel ist, der unter der Wirkung der Schwerkraft normalerweise die Antriebsstellung einnimmt.

5. Fördereinrichtung nach Anspruch 4, dadurch gekennzeichnet, dass das Kopplungselement (27) einen seitlich abstehenden, in der Antriebsstellung in den Weg der Mitnehmerfinger (21) ragenden Kopplungsbereich (24) mit einer Eingriffsfläche (25) für die Mitnehmerfinger (21) aufweist, wobei der Kopplungsbereich (24) durch Verschwenken des Kopplungselementes (27) aus dem Weg der Mitnehmerfinger (21) entfernbar ist.

6. Fördereinrichtung nach einem der vorhergehenden Ansprüche, dadurch gekennzeichnet, dass der Auftreffbereich (35, 39) des Kopplungselementes (27) eine vordere Schrägfläche aufweist, die dazu eingerichtet ist, das Kopplungselement (27) aus der Antriebsstellung heraus in die Freigabestellung zu steuern, wenn sie von einem Hindernis beaufschlagt wird.

7. Fördereinrichtung nach einem der vorhergehenden Ansprüche, dadurch gekennzeichnet, dass die Fördergutträger (1) an ihren entgegengesetzten Enden ein jeweiliges Kopplungselement (27) nach einem der vorhergehenden Ansprüche aufweisen.

8. Fördereinrichtung nach Anspruch 7, dadurch gekennzeichnet, dass die beiden Kopplungselemente (27) eines jeweiligen Fördergutträgers (1) im Wesentlichen gleich ausgebildet sind.

9. Fördereinrichtung nach einem der vorhergehenden Ansprüche,
dadurch gekennzeichnet, dass es sich um eine Hängefördereinrichtung handelt, bei der die Fördergutträger (1) mit ihren Laufrollen (9) hängend an einer Laufschiene (3) abgestützt sind, wobei jeweils zwei Laufrollen (9) an einem Laufwerk (5) angeordnet sind, das einen in der Anordnung an der Laufschiene (3) sich unter der Laufschiene (3) hindurch erstreckenden Bügel aufweist, der an seinem unteren Ende mit einer Trageinrichtung (7) für Fördergut versehen ist, wobei das jeweilige Kopplungselement (27) an der Trageinrichtung (7) oder an dem Bügel (6) oder an einem den Bügel (6) mit der Trageinrichtung (7) verbindenden Verbindungselement angeordnet ist.

10. Fördereinrichtung nach Anspruch 9, dadurch gekennzeichnet, dass der Fördergutträger (1) zwei Laufwerke (6) aufweist, die durch eine Tragstange (7) als Trageinrichtung für Fördergut miteinander verbunden sind.

11. Fördergutträger (1) mit einem daran zwischen einer Antriebsstellung und einer Freigabestellung bewegbar gelagerten Kopplungselement für eine Fördereinrichtung nach einem der vorhergehenden Ansprüche.
